# EUROPEAN PATENT SPECIFICATION

(11) **EP 1 233 847 B1**
(45) Date of publication and mention of the grant of the patent: **14.01.2004**
(21) Application number: 00971197.9
(22) Date of filing: 06.11.2000
(51) Int. Cl.: B24B 5/00, B23Q 39/04, B24B 27/00, B24B 51/00

(54) **MACHINING INSTALLATION WITH CIRCULAR GRINDING STATIONS**
BEARBEITUNGSANLAGE MIT RUNDSCHLEIFSTATIONEN
INSTALLATION D'USINAGE A POSTES DE RECTIFICATION CIRCULAIRES

(30) Priority: 08.11.1999 CH 204399
(43) Date of publication of application: 28.08.2002
(73) Proprietor: Fritz Studer AG, CH-3602 Thun (CH)
(72) Inventor: TANNER, Hans, CH-3629 Oppligen (CH); MÜHLEMATTER, Ulrich, CH-3705 Faulensee (CH)
(74) Representative: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE
(86) International application number: PCT/CH2000/000590
(87) International publication number: WO 2001/034342

(56) References cited:
- FR-A- 1 549 215
- US-A- 4 704 825
- US-A- 4 760 671
- US-A- 5 384 983
- US-A- 5 452 502

## Description

The present invention refers to a machining installation comprising at least two working stations, at least one of which being a circular grinding station.

Circular grinding machines for external and internal grinding are generally mounted as separate, individual units. The workpieces are unclamped after machining and transported to a next processing machine for further treatment. Other circular grinding machines are proposed which allow, on the same machine, the sequential external and internal grinding, and other circular grinding machines exist in which the workpieces can be machined in two different stations. In these machines, the workpiece is pivoted around a horizontal axis from one station to the other.

The increasing tendency to work on a higher scale and at lower prices, leads to the problem how several machining steps that require essentially a circular grinding, can be carried out in a more efficient manner. A substantial obstacle to solve the problem is the prejudice that working stations for high precision circular grinding cannot be integrated into a complex machining installation.

For working with a predetermined bezel; i.e. for milling, drilling and turning, installations are already known since a long time that allow simultaneous working on several workpieces by means of several spindles. For example, French Patent No. 1,549,215 considered as being the closest prior art discloses a device for finishing machining that comprises, disposed on a rotatable circular table, a plurality of workpiece holders and a plurality of tool holders arranged around the workpiece holders. The tools, such as grinding disks, drills, milling cutters or brushes, on one hand, and the manner of adjusting and controlling the circular table, on the other hand, indicate that this device cannot be used for external and internal circular grinding in view of the required precision.

The document US-A-5,452,502 discloses a turret-type machine tool comprising a pivotable workpiece holder that brings the workpieces in front of a tool. The axes of the workpiece holders are aligned to be parallel or perpendicular to each other, respectively. This device too is not suited for the internal or external circular grinding.

The device for grinding faceplate panels of cathode ray tubes according to US-A-4,760,671 wherein the panels are supplied to the grinders on a linear conveyor, cannot be used for high precision machining either.

Starting from this prior art, and in overcoming a prejudice of those skilled in the art, the present invention aims at providing a machining installation which allows to machine workpieces that must be processed by circular grinding, with the required precision and at a high numerical rate and in an efficient manner. This problem is solved by the machining installation according to claim 1.

The invention will now be explained in more detail in the following description of a non-limiting example thereof; reference is made to the drawings wherein:
- FIG. 1: shows schematically and in a perspective view an embodiment of the invention, and
- FIG. 2: shows another presentation of the machining installation of FIG. 1.

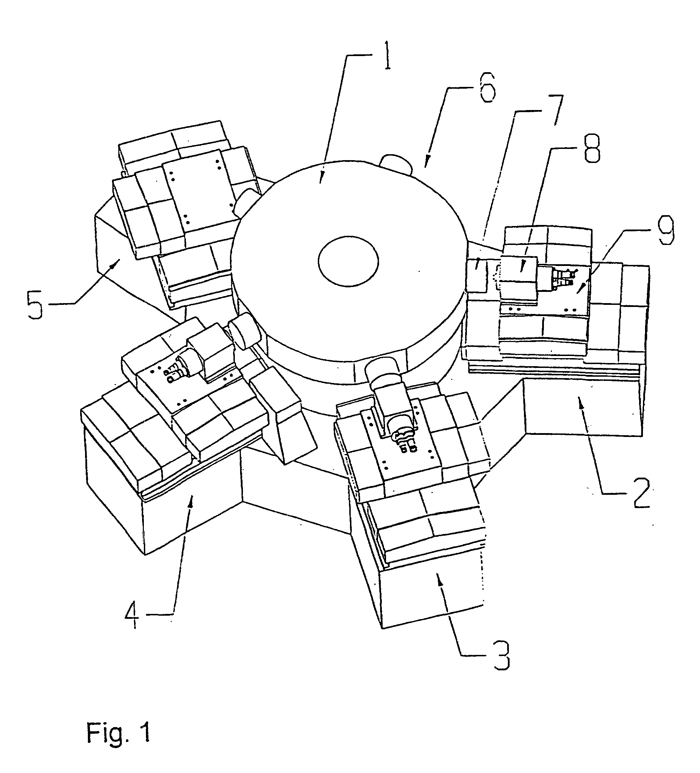

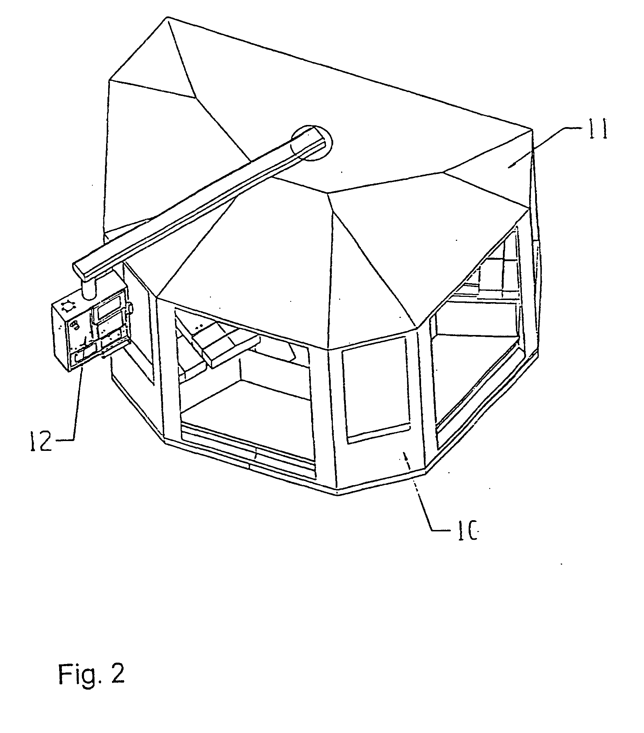

The embodiment of a machining installation according to the invention that is represented in FIGURE 1 and 2, is shown as being a revolving or turret transfer machine. The revolving transfer machine comprises a revolving table 1 equipped with, e.g., four working stations 2 to 5; of course, more or less stations may be provided. There is space for a loading and unloading station in the rear region 6 of FIGURE 1, and this station may be designed as one combined station or as two separate stations at both sides of the rear region, as well as for a measuring station for the finished machined workpieces.

Each working station comprises a workpiece clamping system 7, abbreviated WCS, and at least one circular grinding unit 8 which may be an internal or an external grinding device. The circular grinding units are disposed on the compound slide rest 9. For wear free work, it is advantageous to provide the working table, which can be moved according to two axes, with at least one hydrostatically journalled axis. For high precision applications in machine tools having an undetermined bezel, in particular circular grinding machines, it is of greatest importance to adjust the workpiece or the tool, respectively, most precisely to the machining station; this requirement was one,of the prior obstacles to combine several work stations to one machining installation. If a machining installation should be used for high precision circular grinding, it will be required to provide each workpiece holder with a correction device in order to align the axes of the workpiece holder separately to the axes of the machining spindles of the opposing machining station so that, in each working cycle and during the machining, the exact alignment of the axes can be corrected and adjusted. For the individual alignment of the axes of the workpiece holder during the working process, different positioning system may be used that are already known for high precision alignment in other applications. Furthermore, one or more of the working stations may be designed as machining stations comprising a determined bezel, such as for honing, turning, plane grinding or rubbing, in order to allow the performing of all processing steps in one and the same installation and with only one clamping. Moreover, the machining installation may comprise one or more working stations having a machining laser. This machining installation further allows to contain within its rear region 6 still other measuring stations in addition to the one already described, for example for measuring the workpiece after each processing step. The construction of the installation further permits to install working stations comprising trimming systems for each grinding station, associated to an integrated measuring process. The machining installation can be controlled by a host control and comprise co-ordinated controls for each machining, measuring and handling station.

The working stations comprising circular grinding devices or devices for machining with a determined bezel, have one or more machining spindles which are displaceable along at least one axis. FIGURE 2 further shows the housing 10 with its cover 11 and a pivoting monitor 12.

It follows from the foregoing description that the machining installation of the invention can be adapted to the most different requirements, but it will always comprise at least two working stations, at least one of them being a circular grinding station.

The concept of a machining installation having at least two working stations, at least one of which being a circular grinding station, can also be implemented by a rectilinear transfer machine, the working piece holders being displaced from one station to another in a linear manner. It is desired to get a nearly identical time duration for all different working steps in all stations because the working pace of the whole installation is defined by the longest working step and thus determines the cycle time.

It follows from the above description that the simple fact of obtaining the complete machining of a workpiece in clamping of the workpiece only once for all steps, will allow to get a higher precision with respect to machining in several separate working stations according to the prior art. Furthermore, a more efficient production can be obtained since it becomes more rapid and more economical. The precision may further be improved in a decisive manner by individually adjusting the axis of each workpiece holder by a correcting device to the axes of the spindles of the opposing machining stations.

## Claims

1. A machining installation comprising at least two working stations, at least one of which being a circular grinding station, it comprises a workpiece holder (7) being disposed on a movable transfer device (1), each working station (2 to 5) comprising one or more machining spindles which are displaceable according to at least one axis, said transfer device further comprising at least one loading and unloading station (6), whereby the machining installation is **characterised in that** each workpiece holder (7) comprises a correction device for aligning the axes of the workpiece holder separately and during the working process to the spindle axes of the opposing machining station (2 to 5).

2. The machining installation according to claim 1, **characterised in that** the transfer device is arranged as a revolving transfer machine (1).

3. The machining installation according to claim 1, **characterised in that** the transfer device is arranged as a rectilinear transfer machine.

4. The machining installation according to any one of claims 1 to 3, **characterised in that** the working stations are arranged for internal circular grinding, external circular grinding or for a machining with a predetermined bezel.

5. The machining installation according to any one of claims 1 to 4, **characterised in that** it comprises at least one working station equipped with a laser.

6. The machining installation according to any one of claims 1 to 5, **characterised in that** it further comprises one or more measuring stations for measuring the finished workpiece and/or measuring devices incorporated into each working station.

7. The machining installation according to any one of claims 1 to 6, **characterised in that** each grinding station comprises a planing device having a measuring process integrated therein.

8. The machining installation according to any one of claims 1 to 7, **characterised in that** it is controlled through a host control device having co-ordinated controls for each machining, measuring or handling station.

9. The machining installation according to any one of claims 1 to 8, **characterised in that** it comprises working tables displaceable according to two axes, at least one of said axes being hydrostatically journalled.

## Patentansprüche

1. Bearbeitungsanlage mit mindestens zwei Arbeitsstationen, von welchen mindestens eine eine Rundschleifstation ist, enthaltend einen auf einer beweglichen Transfervorrichtung (1) angeordneten Werkstückhalter (7), wobei die Arbeitsstationen (2 bis 5) jeweils Bearbeitungsspindeln aufweisen, welche entlang mindestens einer Achse verschiebbar sind, und die genannte Transfervorrichtung weiterhin eine oder mehrere Lade- und Entladestationen (6) aufweist, **dadurch gekennzeichnet, dass** jeder Werkstückhalter (7) eine Korrekturvorrichtung aufweist, um die Achsen des Werkstückhalters einzeln und während der Bearbeitung an die Spindelachsen der gegenüberliegenden Bearbeitungsstation (2 bis 5) anzupassen.

2. Bearbeitungsanlage nach Anspruch 1, **dadurch gekennzeichnet, dass** die Transfervorrichtung als Rundtakt-Maschine (1) ausgebildet ist.

3. Bearbeitungsanlage nach Anspruch 1, **dadurch gekennzeichnet, dass** die Transfervorrichtung als Längstakt-Maschine ausgebildet ist.

4. Bearbeitungsanlage nach einem der Ansprüche 1 bis 3, **dadurch gekennzeichnet, dass** die Arbeitsstationen für Innenrundschleifen, Aussenrundschleifen oder für eine Bearbeitung mit einer bestimmten Schneide ausgelegt sind.

5. Bearbeitungsanlage nach einem der Ansprüche 1 bis 4, **dadurch gekennzeichnet, dass** sie mindestens eine Bearbeitungsstation mit einem Laser aufweist.

6. Bearbeitungsanlage nach einem der Ansprüche 1 bis 5, **dadurch gekennzeichnet, dass** sie weiterhin eine oder mehrere Messstationen zur Messung des fertigen Werkstücks und/oder in die jeweilige Arbeitsstation integrierte Messsvorrichtungen aufweist.

7. Bearbeitungsanlage nach einem der Ansprüche 1 bis 6, **dadurch gekennzeichnet, dass** jede Schleifstation eine Abrichtvorrichtung mit integriertem Messverfahren aufweist.

8. Bearbeitungsanlage nach einem der Ansprüche 1 bis 7, **dadurch gekennzeichnet, dass** sie durch eine Host-Steuerung mit koordinierten Steuerungen für jede Bearbeitungs-, Mess- bzw. Handhabungsstation gesteuert wird.

9. Bearbeitungsanlage nach einem der Ansprüche 1 bis 8, **dadurch gekennzeichnet, dass** sie Arbeitstische aufweist, welche entlang den genannten Achsen verschiebbar sind, wobei mindestens eine der Achsen hydrostatisch gelagert ist.

## Revendications

1. Installation d'usinage comprenant deux stations de travail au moins, dont l'une au moins est une station de rectification cylindrique, comprenant un porte-pièce (7) disposé sur un dispositif de transfert (1) déplaçable, chaque station de travail (2 à 5) comprenant une ou plusieurs broches d'usinage lesquelles sont déplaçables selon un axe au moins, ledit dispositif de transfert comprenant en outre une station de chargement et de déchargement (6) au moins, **caractérisée en ce que** chaque porte-pièce (7) comporte un dispositif de correction permettant d'aligner les axes du porte-pièce séparément et pendant les opérations sur les axes des broches de la station d'usinage opposée (2 à 5).

2. Installation d'usinage selon la revendication 1, **caractérisée en ce que** le dispositif de transfert est agencé sous forme d'une machine à transfert rotatif (1).

3. Installation d'usinage selon la revendication 1, **caractérisée en ce que** le dispositif de transfert est agencé sous forme d'une machine à transfert rectiligne.

4. Installation d'usinage selon l'une quelconque des revendications 1 à 3, **caractérisée en ce que** les stations de travail sont agencées pour la rectification cylindrique interne, la rectification cylindrique externe ou pour un usinage à tranchant défini.

5. Installation d'usinage selon l'une quelconque des revendications 1 à 4, **caractérisée en ce qu'**elle comprend au moins une station de travail équipée d'un laser.

6. Installation d'usinage selon l'une quelconque des revendications 1 à 5, **caractérisée en ce qu'**elle comprend en outre une ou plusieurs stations de mesure pour mesurer la pièce finie et/ou des dispositifs de mesure incorporés dans chaque station de travail.

7. Installation d'usinage selon l'une quelconque des revendications 1 à 6, **caractérisée en ce que** chaque station de rectification comprend un dispositif de rabotage muni d'une procédure de mesure intégrée.

8. Installation d'usinage selon l'une quelconque des revendications 1 à 7, **caractérisée en ce qu'**elle est commandée par un dispositif de commande hôte avec des commandes coordonnées pour chaque station d'usinage, de mesure et de manipulation.

9. Installation d'usinage selon l'une quelconque des revendications 1 à 8, **caractérisée en ce qu'**elle comprend des tables de travail déplaçables selon deux axes, l'un au moins desdits axes étant logé par palier hydrostatique.
